# EUROPEAN PATENT APPLICATION

(11) **EP 1 917 851 A2**
(43) Date of publication of application: **07.05.2008**
(21) Application number: 07380264.7
(22) Date of filing: 28.09.2007
(51) Int. Cl.: A01J 25/12

(54) **Filler of cheese molds**

(30) Priority: 05.10.2006 ES 200602534
(71) Applicant: Reunión de Empresas de Maquinaria Manchega, S.L., 13700 Tomelloso, Ciudad Real (ES)
(72) Inventor: Juan Jose Castellanos Hergueta, 13700 Tomelloso, Ciudad Real (ES)
(74) Representative: Rodriguez Perez, Jesus

(57) **Abstract**

A machine for dispensing curds into cheese moulds, characterised in that the fairing (5), which carries the perforated tubes or drainage columns (6), is assembled on the bedplate (1) of the machine with the possibility of vertical displacement and lateral tilting, with the peculiarity that the perforated tubes (6) are removable, for the changing of the same, via the lower end of the fairing (5), after the raising and lateral tilting of the same. The fairing, which is susceptible to be tilted through an angle comprised of between 30° and 90°, features lateral coaxial shafts (8) which may slide along vertical guides (9) on the bedplate (1), being drawn by respective cylinders (10) established between the bedplate (1) and the aforementioned shafts (8). A cog wheel (12) is keyed into at least one of the shafts; this cog wheel turns together with said shaft and locks into a rack (13) installed on the bedplate (1) by means of an auxiliary support (14) in such a way that the upward/downward movement caused by the cylinders (10) to the fairing (5) causes simultaneously a lateral tilting movement of the same, its lower end being made to project outwards, in a position of direct accessibility to the perforated tubes (6) which are arranged in its interior.

## Description

### OBJECT OF THE INVENTION:

This invention relates to a machine which, using milk curds as a raw material, produces the draining of whey from the same, its dispensing and the filling of a series of moulds suited to the size of the cheeses which it is desired to produce.

The invention relates specifically to the means of said machine for supporting the tubes or drainage columns, these being of an interchangeable nature.

The object of this invention is to achieve greater ease in the changing of said tubes or drainage columns, and at the same time a drastic reduction in the height of the machine.

Thus, the invention is included in the industrial sphere of machinery devoted to the production of cheeses.

### BACKGROUND OF THE INVENTION

In any cheese mould filling machine there is a drainer for the curds which come from a vat; this drainer supplies said curds to a hopper which acts as a constant-level tank and which feeds a series of perforated tubes, established on a fairing or central body of the machine; on this fairing in turn there is a frame for the centring of the aforementioned drainage tubes or columns, these being made of perforated sheet, there being several types of the same according to the diameter and the proportions of the sheet, to the distance between said perforations and to the arrangement of the same, it also being possible to vary the length of said tubes. Their purpose is to filter and drain the excess whey which still remains in the curds; these tubes being interchangeable in accordance with the type or size of cheese which it is desired to manufacture.

The machine also features a structure which supports the cheese shapers; two blades, one above and one below, operated by pneumatic cylinders, whose function it is to cut the cheese into portions; finally, the machine also features a mould transporting system from the inlet to the outlet of the machine.

As mentioned above, the perforated tubes or drainage columns are interchangeable in accordance with the type or size of the cheese it is desired to produce. Currently, the changeover of said tubes is carried out by removing them in an upward direction, through the hopper; for this reason a considerable vertical space is required, as it is necessary to add the length of the tube being extracted to the height of the machine itself; this additional height may be approximately 1 metre above the machine.

An additional problem is the risk to which the machine operators are subjected, as in order to carry out the changeover manoeuvres, said machine operators are obliged to climb and descend a ladder and to carry out works at a height of not less than two metres, this implying a considerable risk of accidents.

### DESCRIPTION OF THE INVENTION

The machine for dispensing curds into cheese moulds proposed by the invention resolves to a perfectly satisfactory extent the problems outlined above, from both of the aspects mentioned.

In order to do this, and more specifically, the invention consists of arranging the supporting structure for the perforated columns in such a way that said columns are removable from the lower zone of the fairing, that is to say, practically at ground level, in areas where there is a total absence of risk of work-related accidents, and where the height necessary is considerably less.

In order to do this, and more specifically, the fairing is assembled on the bedplate of the machine by means of a pair of lateral guides, along which said fairing is vertically moveable, bringing with it the hopper; to this end, two pneumatic cylinders are arranged between the bedplate and the fairing; these cylinders bring about the displacement of said fairing. For this displacement, a cog wheel duly fixed to a shaft duly fixed to the fairing, which moves along a rack which in turn is fixed to the bedplate, brings about a lateral tilting movement of the fairing-hopper assembly, which may comprise an angle of between 30° and 90°; in this way, correspondingly with the raising of the fairing, and accordingly of the perforated tubes housed in its interior, a lateral tilting movement of said fairing is produced; this considerably facilitates access to the tubes. In this way, and as has been mentioned above, by means of acting upon the aforementioned pneumatic cylinders, it is automatically and practically instantaneously achieved that the drainage columns or perforated tubes adopt an optimal position for the changing of the same. It should also be highlighted that this position is also ideal for facilitating the periodic cleaning operations of the machine.

### DESCRIPTION OF THE DRAWINGS

To complement the description which is being made, and with the purpose of contributing to a better understanding of the characteristics of the invention, in accordance with a preferred embodiment of the same, a set of drawings with an illustrative and non-limitative character is attached as an integral part of said description, wherein the following is portrayed:

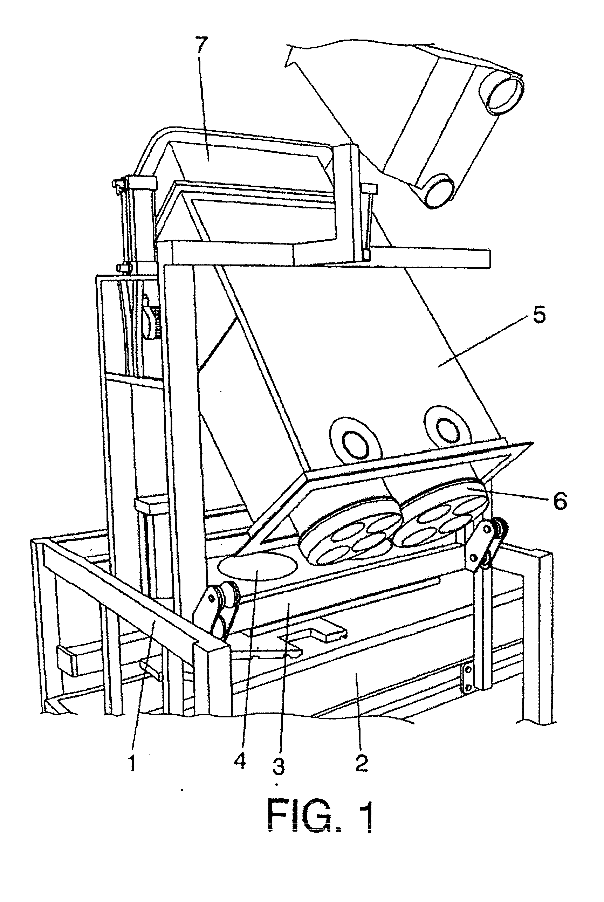

Figure 1 Portrays a partial perspective view of a cheese mould filling machine executed in accordance with the object of this invention, and wherein the fairing which supports the perforated tubes is in the position for the changing of said tubes.

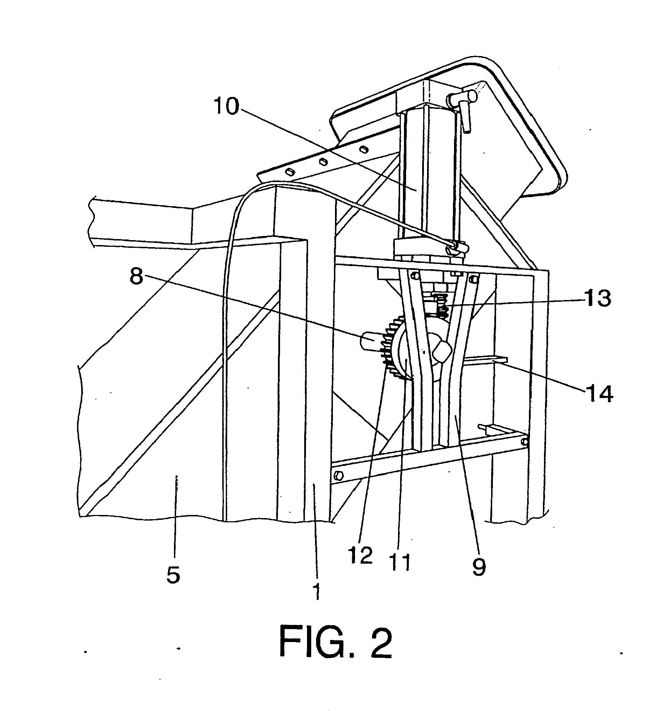

Figure 2 Portrays another perspective detail of the machine in the previous drawing, wherein the means for moving the fairing which carries the columns or perforated tubes may be seen with greater clarity.

### PREFERRED EMBODIMENT OF THE INVENTION

On contemplating the aforementioned drawings, it may be seen how the cheese mould filling machine proposed by this invention, as is the case of any conventional machine of this type, is comprised, in addition to other conventional elements as mentioned above, of a bedplate (1), conveniently stabilised on the floor, wherethrough there passes a conveyor belt (2) for the entry and exit of the moulds, located below a supporting structure (3) for the cheese shapers (4), above which there is a fairing (5); also assembled on the bedplate (1), which houses in its interior the tubes or perforated drainage columns (6) which receive the curds from a hopper above (7).

Thus, now in accordance with the invention, the fairing (5) features on its lateral walls shafts (8) arranged coaxially, vertically moveable along guides (9) on the bedplate (1), specifically with the intervention of corresponding pneumatic cylinders (10) established between said bedplate (1) and their respective rings (11), these being assembled so as to be free to turn on their respective shafts (8) by means of bearings, in such a way that the fairing (5) in addition to being capable of undergoing a vertical displacement movement, is likewise capable of tilting freely by means of its shafts (8) on the rings (11).

In order to complement the structure described, at least one of the shafts (8) has a cog wheel (12) keyed into the same, which locks into a rack (13) which is duly fixed to the chassis (1) by means of an auxiliary support (14) consisting, for example, of an L-section platen duly welded to the frame (1) in such a way that during the upward/downward movement of the fairing (5), the rack (13) obliges the cog wheel (12) to turn in one direction or the other, bringing about in consequence the lateral tilting movement of the fairing (5), as portrayed in the figures, in such a way that by means of this upward and tilting movement of the fairing (5), the manoeuvres for the changing of the perforated drainage columns (6) are considerably facilitated.

There shall preferably be two cog wheels (12) on their respective shafts (8), also with their respective racks (13).

## Claims

1. A machine for dispensing curds into cheese moulds, of the type which comprises an upper hopper (1) which receives and supplies the curds, coupled to a fairing wherein several perforated tubes or drainage columns are housed, these being of an interchangeable nature, operatively aligned with respective shapers acting as moulds for the respective portions of curds, below which the moulds in themselves are located, fed and removed by means of a transport system, **characterised in that** the fairing (5) which holds the perforated tubes or drainage columns (6) is mounted on the bedplate (1) of the machine, it being possible to vertically displace and laterally tilt the same, with the peculiarity that the perforated tubes (6) are removable, for replacement of the same, via the lower end of the fairing (5), after the raising and lateral tilting of the same.

2. A machine for dispensing curds into cheese moulds, according to claim 1, **characterised in that** the fairing (5) features lateral, coaxial shafts (8), the ends of which are able to slide along vertical guides (9) on the bedplate (1), being drawn by respective cylinders (10) established between the bedplate (1) and the aforementioned shafts (8), specifically by means of rings (11) which encircle the shafts (8) via bearings.

3. A machine for dispensing curds into cheese moulds, according to preceding claims, **characterised in that** at least one of the shafts (8) has a cog wheel (12) keyed into the same, which turns together with said shaft (8), and which locks into a rack (13) which is fixedly installed on the bedplate (1) preferably by means of an auxiliary support (14) in such a way that during the upward/downward movement caused by the cylinders (10) to the fairing (5), it causes simultaneously a lateral tilting movement of the same, its lower end being made to project outwards, in a position of direct accessibility to the perforated tubes (6) which are arranged in its interior.

4. A machine for dispensing curds into cheese moulds, according to preceding claims, **characterised in that** the fairing (5) is susceptible to be tilted through an angle comprised of between 30° and 90°.
